Europäisches Patentamt

European Patent Office

Office européen des brevets

(11) Veröffentlichungsnummer: **0 181 627**
**A2**

(12) **EUROPÄISCHE PATENTANMELDUNG**

(21) Anmeldenummer: **85114316.4**

(22) Anmeldetag: **11.11.85**

(51) Int. Cl.⁴: **B 32 B 15/06**
**B 32 B 15/16, E 04 B 1/86**

(30) Priorität: **16.11.84 AT 3632/84**

(43) Veröffentlichungstag der Anmeldung:
**21.05.86 Patentblatt 86/21**

(84) Benannte Vertragsstaaten:
**CH DE FR IT LI NL SE**

(71) Anmelder: **Austria Metall Aktiengesellschaft**

**A-5282 Braunau am Inn(AT)**

(72) Erfinder: **Scherzer, Wilhelm**
**Franz-Peterstrasse 18**
**A-2560 Berndorf(AT)**

(74) Vertreter: **Hain, Leonhard, Dipl.-Ing.**
**Tal 18/IV**
**D-8000 München 2(DE)**

(54) **Schalldämmende Verbundplatte sowie Verfahren zu ihrer Herstellung.**

(57) Bei einer schalldämmenden Verbundplatte aus zwei metallischen Deckblechen (1) besteht der Gummikern (2) aus gebundenem Gummischrott oder Gummigranulat, wodurch sowohl die Wärme- als auch die Schalldämmung merklich erhöht werden.

In einfacher Weise wird diese Verbundplatte dadurch hergestellt, daß die beschichteten Deckbleche (1) und Schmelzkleberfolien (3) auf den Gummischrottkern (2) aufgelegt werden, worauf dieser Verbund unter Erhitzung einer fortschreitenden Flächenpressung unterworfen wird.

Figur 1

Anmelder: Austria Metall Aktiengesellschaft
A-5282 Braunau am Inn, Oberösterreich

Titel:     Schalldämmende Verbundplatte sowie
Verfahren zu ihrer Herstellung

Beschreibung

Die Erfindung betrifft eine schalldämmende Verbundplatte gemäß dem Oberbegriff des Patentanspruches 1. Weiterhin betrifft die Erfindung ein Verfahren zur Herstellung dieser Verbundplatte.

Es ist bekannt, Verbundkonstruktionen dieser Art, bei denen ein Vollgummikern an Metallbleche anvulkanisiert ist, als Schalldämm- und Schwingungsdämmelemente bzw. Gummifedern zu benutzen. Sie sind jedoch sehr schwer und haben einen schlechten Wärmedämmwert. Bei Verbundplatten mit einem Kunststoffkern sind zwar die Wärmedämmwerte besser, jedoch lassen deren Schalldämmung und Hitzebeständigkeit wieder zu wünschen übrig.

Der Erfindung liegt daher die Aufgabe zugrunde, eine schalldämmende Verbundplatte zu schaffen, die erhöhte Schall- und Wärmedämmwerte aufweist und die sich besonders günstig herstellen läßt.

Diese Aufgabe wird an einer Verbundplatte gemäß dem Oberbegriff des Patentanspruches 1 durch die kennzeichnenden Merkmale dieses Patentanspruches gelöst.

Vorteilhafte Weiterentwicklungen sind in Unteransprüchen beansprucht.

Ein vorteilhaftes Verfahren zur Herstellung dieser Verbundplatte ist in Anspruch 4 beansprucht.

Dadurch, daß ein Gummikern aus gebundenem Gummischrott oder Granulat verwendet wird, ist es möglich, eine relativ leichte Platte zu schaffen, die gute Schall- und Wärmedämmwerte aufweist und darüber hinaus auch hitzebeständig ist, was für den Brandschutz wichtig ist. Das Gummigranulat, das beispielsweise billig aus Altreifengummi hergestellt werden kann, wird durch ein geeignetes Bindemittel zu einer porösen Bahn von etwa 4 bis 10 mm Dicke verarbeitet und auf diese Bahn werden sodann die metallischen Deckschichten aus Eisen oder Aluminiumblech aufgebracht.

Die Erfindung wird nachfolgend anhand einer in der Zeichnung beispielsweise dargestellten Verbundplatte näher beschrieben. Dabei zeigen:

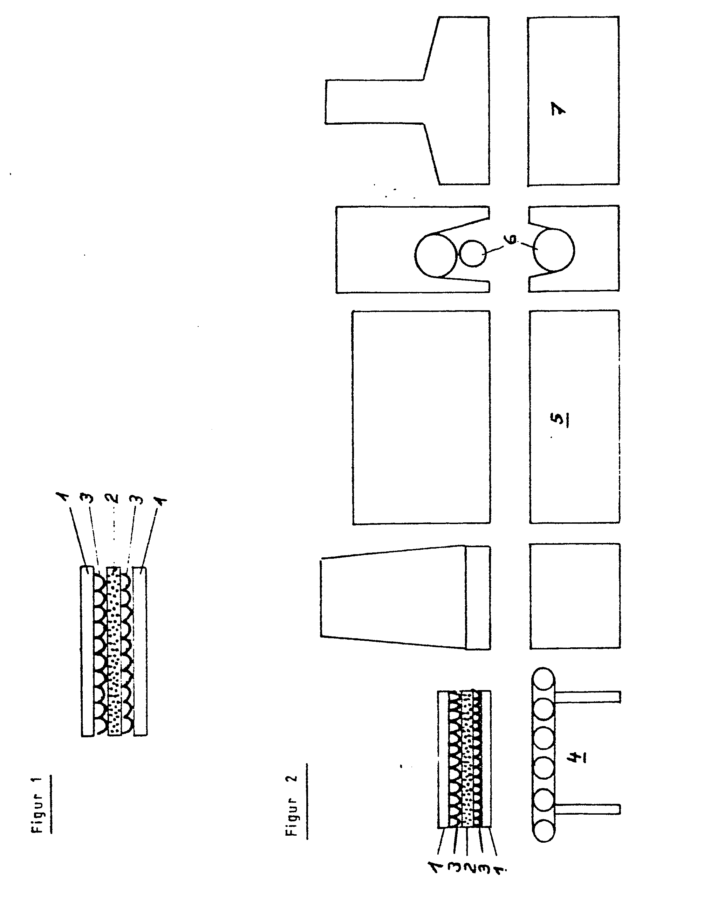

Fig. 1    einen Querschnitt durch eine Platte und
Fig. 2    ein Schema eines Herstellungsverfahrens.

Wie man aus der Zeichnung erkennen kann, besteht die Verbundplatte aus zwei metallischen Deckblechen 1, die beidseitig auf einen Kern 2 aus Gummischrott aufkaschiert sind. Die Herstellung erfolgt in der Weise, daß die gegebenenfalls vorher lackierten, anodisch oxidierten oder mit einer Dekorationsfolie beschichteten Metallbleche 1 in einer Aufgabestation 4 nach Zuschneiden auf die entsprechenden Formate unter Zwischenlage von Heißklebefolien 3 auf den Gummischrottkern 2 aufgelegt werden. Die Heißklebefolien 3 sind beidseitig beschichtet, und zwar auf der Metallseite mit einem Metallkleber und auf der Gummiseite mit einem Gummikleber. Das ganze Paket wird sodann in eine Erhitzungsstation 5 gebracht und gelangt von dieser zwischen zwei Gummiwalzen 6, welche eine lineare, fortschreitende Flächenpressung auf das erhitzte Paket ausüben, was die besondere Haftung der Schichten aufeinander bewirkt.

Nach Durchlauf durch eine Kühlstation 7 sind die Platten bereits gebrauchsfertig. Sie weisen eine hohe Elastizität auf, die selbst Biegen gestattet, können durch Schrauben und Nieten verbunden werden, sie sind korrosionsbeständig und können daher überall eingesetzt werden, wo Verkleidungen mit hoher Schalldämmung und Brandsicherheit erforderlich sind, z.B. für Wand- und Deckenverkleidungen, Schaltschrankverkleidungen, Klimakanäle, Türverkleidungen, Maschinenverkleidungen, Transportaufbauten, aber auch für Tischtennisplatten usw.

Patentansprüche

1. Schalldämmende Verbundplatte aus zwei metallischen Deckblechen (1) und einem Gummikern (2), dadurch gekennzeichnet, daß der Gummikern (2) aus gebundenem Gummischrott oder Granulat besteht.

2. Verbundplatte nach Anspruch 1, dadurch gekennzeichnet, daß zwischen den Deckblechen (1) und dem Gummischrottkern (2) Klebefolien (3) angeordnet sind, die auf der Metallseite mit einem Metallkleber und auf der Gummiseite mit einem Gummikleber beschichtet sind.

3. Verbundplatte nach Anspruch 1 oder 2, dadurch gekennzeichnet, daß die Schichten unter Druck und Hitze verklebt sind.

4. Verfahren zur Herstellung einer Verbundplatte nach den Ansprüchen 1 bis 3, dadurch gekennzeichnet, daß die Oberseiten der Deckbleche (1) organisch beschichtet werden, sodann die Schmelzkleberfolien (3) und die Deckbleche (1) auf den fertigen Gummischrottkern (2) aufgelegt und sodann durch Erhitzung und lineare, fortschreitende Flächenpressung der Verbund hergestellt wird.

Figur 1

Figur 2